# EUROPÄISCHE PATENTANMELDUNG

(11) **EP 1 362 873 A1**
(43) Veröffentlichungstag der Anmeldung: **19.11.2003**
(21) Anmeldenummer: 03010085.3
(22) Anmeldetag: 03.05.2003
(51) Int. Cl.: C08G 18/42, C09D 175/06, C08G 18/80

(54) **Pulverlacke auf der Basis von Polyestern und mit Duroplast modifizierten Polyestern**

(30) Priorität: 10.05.2002 DE 10221048
(71) Anmelder: Degussa AG, 40474 Düsseldorf (DE)
(72) Erfinder: Weiss, Jörn Volker, Dr., 45721 Haltern am See (DE); Grenda, Werner, 44627 Herne (DE)

(57) **Zusammenfassung**

Polyurethan-Pulverlacke enthaltend
A) 3 bis 35 Gew.-% einer polymeren Zusammensetzung aus
   1. mindestens einem Polymer und
   2. mindestens einem Duroplasten in Mengen von 0,5 bis 50 Gew.-%, bezogen auf die Summe von 1. und 2.,
      hergestellt durch Reaktion in der Polymermatrix A1 aus
      a) mindestens einer Ausgangskomponente mit NH₂-Gruppen
         und
      b) mindestens einer Ausgangskomponente mit NCO-Gruppen, wobei a) und b) gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens eines Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

## Beschreibung

Die Erfindung beschreibt neue Pulverlacke auf der Basis von Polyestern und mit Duroplast modifizierten Polymere und Vernetzern.

Beschichtungssysteme, die einem Substrat eine gleichmäßig ebene und matte Oberfläche verleihen, besitzen ein erhebliches Interesse. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens führen zu Schwankungen im Oberflächenglanz. Die Reproduzierbarkeit des Matteffektes ist nicht gewährleistet.

Harnstoff- und uretdiongruppenhaltige Polyisocyanate sind erst seit kurzer Zeit bekannt. Die DE-OS 195 46 750 beansprucht Reaktionsprodukte aus Isophorondiisocyanat-Uretdion und disekundären Diaminen als Härter zur Herstellung von Polyurethan (PUR)-Beschichtungen mit glänzenden Oberflächen.

In der DE-OS 196 30 844 werden erstmals matte PUR-Pulverlacke beschrieben, die harnstoffgruppenhaltige Isophorondiisocyanat-Uretdione als Härterkomponente enthalten. Sie werden durch die Umsetzung von Uretdionen mit Wasser hergestellt. Dabei bilden sich intermediär unter Abspaltung von Kohlendioxid primäre Amine, die sich mit noch vorhandenen Isocyanatgruppen zu Harnstoffen umsetzen. Die Stickstoffatome der Harnstoffgruppen sind jeweils monosubstituiert. Reaktionen von Polyisocyanaten mit Wasser sind aufgrund der Bildung von Nebenprodukten schwierig zu reproduzieren.

Die DE-OS 196 37 375 beschreibt PUR-Pulverlacke, die durch harnstoffgruppenhaltige Isophorondiisocyanat-Uretdione als Härter mattierend eingestellt werden. Diese Härter entstehen durch die Umsetzung von Isophorondiisocyanat-Uretdion mit disekundären Diaminen. Die disekundären Diamine sind Umsetzungsprodukte aus diprimären Diaminen und Malein- oder Fumarsäureestern.

In der DE-OS 196 37 377 und in der DE-OS 198 16 547 werden uretdiongruppen- und harnstoffgruppenhaltige Polyadditionsprodukte als Härterkomponente zur Mattierung von PUR-Pulverlacken beansprucht. Die Herstellung dieser Härter erfolgt durch die Umsetzung von Isophorondiisocyanat-Uretdion mit Diaminen, die eine primäre und sekundäre Aminogruppen enthalten. Die Herstellung der reinen Diamine ist z. T. komplex und recht kostenintensiv.

In der DE-OS 100 42 318 werden nun matte Polyurethan-Pulverlacke beschrieben, die aus bestimmten Hydroxylgruppen-haltigen Polyestern, marktüblichen Polyisocyanaten als Vernetzern und speziellen, separat hergestellten Polyharnstoffen als Mattierungsmitteln bestehen, wobei alle Einsatzstoffe physikalisch gemischt zum Pulverlack verarbeitet werden.

Die EM 010226a (internes Aktenzeichen) beschreibt Polymere, insbesondere Hydroxylgruppen-haltige Polyester und Acrylate, in denen Duroplaste durch Einbringung ihrer entsprechenden Ausgangsstoffe und anschließende Reaktion hergestellt werden. Als besonders geeignet wird die Herstellung bestimmter Polyharnstoffe in den genannten Polymeren beschrieben.

Aufgabe war es, neue Polyurethan-Pulverlacke für matte Beschichtungen zu finden.

Gegenstand der Erfindung sind Polyurethan-Pulverlacke enthaltend
A) 3 bis 35 Gew.-% einer polymeren Zusammensetzung aus
   1. mindestens einem Polymer und
   2. mindestens einem Duroplasten in Mengen von 0,5 bis 50 Gew.-%, bezogen auf die Summe von 1. und 2.,
      hergestellt durch Reaktion in der Polymermatrix A1) aus
      a) mindestens einer Ausgangskomponente mit NH₂-Gruppen
         und
      b) mindestens einer Ausgangskomponente mit NCO-Gruppen, wobei a) und b) gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens einen Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

Ein bevorzugter Gegenstand der Erfindung sind Polyurethan-Pulverlacke enthaltend
A) 3 bis 35 Gew.-% einer polymeren Zusammensetzung aus
   1. mindestens einem OH-Gruppen aufweisenden Polymer mit einer OH-Funktionalität von ≥ 2, bevorzugt ein Polyester und/oder Polyacrylat,
      und
   2. mindestens einem Duroplasten in Mengen von 0,5 bis 50 Gew.-%, bezogen auf die Summe von 1. und 2.,
      hergestellt durch Reaktion in der Polymermatrix A1) aus
      a) mindestens einer Ausgangskomponente mit NH₂-Gruppen
         und
      b) mindestens einer Ausgangskomponente mit NCO-Gruppen, wobei a) und b) gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens eines Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

Als Polymere A1) sind prinzipiell alle bekannten geeignet wie z. B. Polyolefine, Polybutadiene, Polystyrole, Polysiloxane, Polyamide, soweit sie einen Schmelzpunkt von nicht höher als 220 °C besitzen. Auch Copolymere und Blockpolymerisate eignen sich als Polymer A, wie z. B. Styrol-Dien-Polymerisate.

Als Polymere mit einer Funktionalität von mindestens 2 eignen sich allgemein alle Polymere, die derartige Funktionen aufweisen, insbesondere jedoch hydroxylgruppenaufweisende Polyester und Polyacrylate.

Die bevorzugt eingesetzten hydroxylgruppenhaltigen Polyester werden hergestellt durch Polykondensation von geeigneten Di- und/oder Polycarbonsäuren, -estern und/oder Anhydriden und Di- und/oder Polyolen. Die Kondensation erfolgt auf an sich bekannte Weise in einer Inertgas-Atmosphäre bei Temperaturen von 100 bis 260 °C, vorzugsweise 130 bis 220 °C, in der Schmelze oder in azeotroper Fahrweise, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist. Die für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure bzw. - soweit zugänglich - deren Anhydride oder Ester. Besonders gut geeignet sind Isophthalsäure, Terephthalsäure, Hexahydroterephthalsäure und 1,4-Cyclohexandicarbonsäure.

Als Polyole kommen z. B. Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methyl-propandiol-1,3, 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylen-glykol und Hydroxypivalinsäureneopentylglykolester, infrage. Bevorzugt sind Monoethylenglykol, Neopentylglykol, Dicidol, Cyclohexandimethanol, Trimethylolpropan und Glycerin.

So hergestellte amorphe Polyester haben bevorzugt eine OH-Zahl von 15 - 200 mg KOH/g, einen Tg von 35 - 85 °C, einen Schmelzbereich von 60 bis 110 °C und eine Säurezahl von <10 mg KOH/g. Die Molmassen betragen bevorzugt 2000 bis 7000.

Entsprechend hergestellte kristalline Polyester haben eine OH-Zahl von 15 bis 130 mg KOH/g, eine Tg von -50 bis 40°C, einen Schmelzbereich von 60 bis 130 °C und eine Säurezahl von < 8 mg KOH/g. Die Molmassen betragen bevorzugt 1800 bis 6500.

Die bevorzugt eingesetzten hydroxylgruppenhaltigen Polyacrylate mit einer OH-Zahl von 20 bis 150 mg/KOH, einer Molmasse von 1800 bis 6000 und einem Tg von 30 bis 90 °C werden hergestellt durch Polyaddition geeigneter ethylenisch ungesättigter Monomere. Beispiele für solche Verbindungen sind Styrol, α-Methylstyrol, C₂ - C₄₀-Alkylester der Acrylsäure oder C₁bis C₄₀-Alkylester der Methacrylsäure, wie Methylmethacrylat, Ethylacrylat, Propylmethacrylat, Isopropylacrylat, n-Butylmethycrylat, Isobuthylacrylat, tert.-Buthylmethacrylat, Pentylmethacrylat, n-Hexylmethacrylat, n-Heptylmethacrylat, n-Octylacrylat, 2-Ethylhexylacrylat, Decylmethacrylat, Laurylmethacrylat, Palmithylmethacrylat, Phenoxyethylmethacrylat, Phenylmethacrylat, Cyclohexymethacrylat, tert.-Butylcyclohexylacrylat, Buthylcyclohexylmethacrylat, Trimethylcyclohexylmethacrylat. Hydroxyalkylester, α, β-ungesättigter Carbonsäuren wie der Acrylsäure und/oder Methacrylsäure mit einer primären OH-Gruppe und einem C₅ - C₁₈-Hydroxyalkylrest gehören ebenfalls zu dieser Gruppe, wie z. B. Hydroxyhexylacrylat, Hydroxyoctoylacrylat und die entsprechenden Methacrylate und Umsetzungsprodukte von Hydroxyethyl(meth)acrylat mit Caprolacton, sowie Monomere mit sekundären OH-Funktionen, wie Addukte aus Glycidyl(meth)acrylat und gesättigten kurzkettigen Säuren mit C₁ - C₃-Alkylresten, z. B: Essigsäure oder Propionsäure.

Erfindungsgemäß wird der Duroplast A2) in der Polymermatrix A1) aus seinen Ausgangskomponenten hergestellt. Die Ausgangskomponenten A2a) und A2b) weisen eine Funktionalität von mindestens 2,0 auf, wobei immer eine Ausgangskomponente mit einer Funktionalität von größer zwei in Mengen von 0,5 bis 100 Gew.-%, bezogen auf die Komponente A2), in der Komponente A2) vorhanden sein muss. Prinzipiell ist es unerheblich, ob die Aminokomponente oder die Isocyanatkomponente die Funktionalität von mehr als zwei aufweist, bevorzugt wird jedoch die Isocyanatkomponente verwendet. Die ungefähren Molmassen der Duroplasten variieren von 2000 bis 70000, bevorzugt größer 4000.

Im Allgemeinen sind die Duroplaste A2) in Mengen von 0,5 bis 50 Gew.-%, bevorzugt von 2 bis 30 Gew.-%, bezogen auf die polymere Zusammensetzung A), in dieser enthalten.

Zur Herstellung der Duroplaste können als Komponente A2b) alle bekannten aliphatischen, cycloaliphatischen, araliphatischen sowie aromatischen Isocyanate und deren Isocyanurate, falls zugänglich, in reiner Form oder als beliebige Mischungen untereinander verwendet werden. Beispielhaft seien aufgeführt: Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiisocyanate, Pentandiisocyanate, Hexandiisocyanate wie Hexamethylendiisocyanat (HDI) oder 1,5-Diisocyanato-2-methylpentan (MPDI), Heptandiisocyanate, Octandiisocyanate, Nonandiisocyanate wie 1,6-Diisocyanato-2,4,4-trimethylhexan oder 1,6-Diisocyanato-2,2,4-trimethylhexan (TMDI), Nonantriisocyanate (z. B. 4-Isocyanatomethyl-1,8-octandiisocyanat (TIN)), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) sowie 1,4-Bis(isocyanatomethyl)cyclohexan (1,4-H₆-XDI). Die Aufzählung versteht sich inklusive aller Regio- und Stereoisomeren der beispielhaft benannten Isocyanate. Bevorzugt werden HDI, IPDI, MPDI, TMDI , 1,3- und 1,4- H₆-XDI, NBDI sowie Mischungen aus HDI und IPDI eingesetzt. Bevorzugte Polyharnstoffe im Rahmen der Erfindung sind solche, die aus IPDI, IPDI-Isocyanurat, HDI oder HDI-Isocyanurat und beliebigen Gemischen daraus bestehen.

Im Rahmen der Erfindung können als Komponente A2a) alle aliphatischen, (cyclo)aliphatischen, cycloaliphatischen und aromatischen Diamine und/oder Polyamine (C₅ - C₁₈) eingesetzt werden.

Als Diamine sind prinzipiell 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, geeignet.

Auch Mischungen der genannten Diamine sind verwendbar. Bevorzugt wird Isophorondiamin eingesetzt.

Polyamine mit mehr als 2 NH-Gruppen sind ebenfalls geeignet, wie z. B. 4-Aminomethyl-1,8-octandiamin, Diethylentriamin, Dipropylentriamin und Tetraethylenpentamin.

Im Allgemeinen werden Duroplaste mit einem NCO/NH₂-Verhältnis von 0,8 bis 1,2 zu 1 hergestellt. Bei Einsatz äquimolarer Mengen mit einem NCO/NH₂-Verhältnis von 1 zu 1 werden unendlich vernetzte, feste und spröde Duroplasten in den Polymeren erhalten.

Bevorzugte Duroplaste im Rahmen der Erfindung sind solche, die aus IPD und IPDI, und/oder IPDI-Isocyanurat und/oder HDI und/oder HDI-Isocyanurat bestehen. Diese weisen Molmassen von mehr als 4000 auf und enthalten mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat. Auch Polyharnstoffe aus reinen Isocyanuraten und IPD sind bevorzugt. Sie werden in Substanz, Lösung oder z. B. in Extrudern hergestellt.

In einer bevorzugten Ausführungsform der Erfindung sind 3 bis 20 Gew.-%, besonders bevorzugt 4, 5, 6, 7, 8, 9, 10, 11, 12, 13, 14, 15, 16, 17, 18, 19 Gew.-% Duroplast in der polymeren Zusammensetzung A), insbesondere im OH-haltigen Polyester und Acrylat enthalten.

Bei dem Polyester B) ist es erfindungswesentlich, dass es sich dabei um amorphe oder (semi)kristalline, hydroxylgruppenhaltige Polyester bzw. Mischungen aus beiden handelt. Alle derartigen bekannten Polyester mit einer OH-Zahl von 10 bis 250 mg KOH/g sind im Rahmen der Erfindung prinzipiell geeignet.

Die (semi)kristallinen Polyester weisen in der Regel eine Hydroxylzahl von 15 - 150 mg KOH/g auf; die Schmelzpunkte liegen zwischen 60 und 130°C und die Glasübergangstemperatur zwischen -50 und 40 °C, das mittlere Molekulargewicht liegt zwischen 1800 und 6500. Die Polyester basieren auf linearen Dicarbonsäuren und aliphatischen oder cycloaliphatischen, linearen oder verzweigten Polyolen. Als Dicarbonsäuren werden Bernsteinsäure, Adipinsäure, Sebacinsäure und/oder Dodecandisäure bevorzugt eingesetzt. In dieser Erfindung schließt der Ausdruck Dicarbonsäure stets auch deren Ester, Anhydride oder Säurechloride ein, da sie selbstverständlich ebenfalls eingesetzt werden können. Weiterhin können andere aliphatische, cycloaliphatische oder aromatische Dicarbonsäuren eingesetzt werden. Beispiele für derartige Dicarbonsäuren sind Glutarsäure, Azelainsäure, 1,4-, 1,3- oder 1,2-Cyclohexandicarbonsäure, Terephthalsäure oder Isophthalsäure. Als Polyolkomponente für die (semi)kristallinen Polyester werden bevorzugt Monoethylenglykol, Butandiol-1,4 oder Hexandiol-1,6 eingesetzt. Es können andere aliphatische oder cycloaliphatische, lineare oder verzweigte Polyole mitverwendet werden. Beispiele solcher Polyole sind Diethylenglykol, Hydroxypivalinsäureneopentylglykol, Neopentylglykol, Cyclohexandimethanol, Pentandiol-1,5, Pentandiol-1,2, Nonandiol-1,9, Trimethylolpropan, Glyzerin oder Pentaerythrit.

Die amorphen Polyester besitzen eine Hydroxylzahl von 15 bis 200 mg KOH/g, eine Glasübergangstemperatur von 35 bis 85 °C und ein mittleres Molekulargewicht von 2000 bis 7000, der Schmelzbereich liegt zwischen 60 und 110 °C. Die amorphen Polyester basieren auf linearen oder verzweigten Polycarbonsäuren und aliphatischen oder cycloaliphatischen, linearen oder verzweigten Polyolen. Als Dicarbonsäure wird bevozugt Isophthalsäure eingesetzt. Weiterhin können andere aliphatische, cycloaliphatische oder aromatische Di- oder Polycarbonsäuren eingesetzt werden. Beispiele für derartige Carbonsäuren sind Phthalsäure, Adipinsäure, Azelainsäure, Sebacinsäure, Dodecandisäure, Trimellitsäure, Hexahydroterephthalsäure, Hexahydrophthalsäure, Bernsteinsäure oder 1,4-Cyclohexandicarbonsäure. Als Polyolkomponente für die amorphen Polyester werden lineare, aliphatische oder cycloaliphatische Diole, eingesetzt. Beispiele für derartige Diole sind Monoethylenglykol, Diethylengykol, Hydroxypivalin-säureneopentylglykolester, Neopentylglykol, Cyclohexandimethanol, Butandiol-1,4, Pentan-diol-1,5, Pentandiol-1,2, Hexandiol-1,6 oder Nonandiol-1,9. In untergeordneten Mengen können verzweigte, aliphatische oder cycloaliphatische Polyole mitverwendet werden. Beispiele für derartige Polyole sind Trimethylolpropan, Glyzerin oder Pentaerythrit.

Die (semi)kristallinen und amorphen Polyester können auf an sich bekannte Weise durch Kondensation von Polyolen und Polycarbonsäuren oder deren Ester, Anhydride oder Säurechloride in einer Inertgasatmosphäre bei Temperaturen von 100 bis 260 °C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 bis 5, 21 bis 23, 40 bis 44, Georg Thieme Verlag, Stuttgart, 1963, bei C. R. Martens, Alkyd Resins, 51 bis 59, Reinhold Plastics Appl. Series, Reinhold Publishing Comp., New York, 1961 oder in den DE-OSS 27 35 497 und 30 04 903, beschrieben ist.

Als Härter C) sind prinzipiell alle bekannten Härter mit einer Funktionalität von mindestens 1,7 auf der Basis von Polyisocyanaten für den Bereich Pulverlacke einsetzbar. Bevorzugt werden blockierungsmittelhaltige wie auch intern blockierte Polyisocyanate eingesetzt. Sie werden z. B. in der DE-OSS 21 05 777, 25 42 191, 27 35 497, 30 39 824, 30 30 572, 30 30 513 und 37 39 549, beschrieben.

Als Isocyanate zur Herstellung der Härterkomponente C) werden Diisocyanate aliphatischer und (cyclo)aliphatischer und/oder cycloaliphatischer Struktur eingesetzt. Derartige Diisocyanate werden z. B. im Houben-Weyl, Methoden der organischen Chemie, Band 14/2, S. 61 ff und J. Liebigs Annalen der Chemie, Band 562, S. 75- 136 beschrieben. Bevorzugt werden in der Regel die technisch leicht zugänglichen aliphatischen Diisocyanate wie Hexamethylendiisocyanat, 2-Methyl-pentamethylen-1,5-diisocyanat, 2-Ethyltetramethylen-1,4-butandiisocyanat oder Trimethyl-hexamethylen-1,6-diisocyanat, insbesondere das 2,2,4-und das 2,4,4-Isomere und technische Gemische beider Isomeren, die (cyclo)aliphatischen Diisocyanate wie Isophorondiisocyanat sowie die cycloaliphatischen Diisocyanate wie 4,4' Diisocyanatodicyclohexylmethan oder Norbornandiisocyanat eingesetzt. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen.

Zur Herstellung der (Urethangruppen enthaltenden) Isocyanatkomponente C) wird in einer ersten Stufe das Diisocyanat mit dem Polyol umgesetzt. Hierbei wird zu dem bei 100 bis 120 °C vorgelegten Diisocyanat das Polyol unter intensivem Rühren innerhalb von 2 bis 3 Stunden unter Stickstoff und Ausschluss von Feuchtigkeit so zudosiert, dass pro OH-Äquivalent des Polyols mindestens 2, maximal 8, vorzugsweise 4 bis 6 Äquivalente NCO des Diisocyanats zur Reaktion kommen. Um die Reaktion zu beschleunigen, kann man einen konventionellen Urethanisierungskatalysator hinzugeben, z. B. Organozinnverbindungen wie auch bestimmte tertiäre Amine, wie Triethylendiamin, und zwar in einer Menge von 0,01 bis 1 Gew.-%, vorzugsweise 0,05 bis 0,15 Gew.-%, bezogen auf das Reaktionsgemisch.

In der zweiten Stufe werden dann die NCO-Gruppen mit einem Blockierungsmittel blockiert. Die Reaktion kann in Substanz oder auch in Gegenwart geeigneter (inerter) Lösemittel durchgeführt werden. Bevorzugt wird jedoch in Substanz gearbeitet. Dabei wird zu dem Polyol-Diisocyanat-Addukt bei ca. 100 bis 130 °C das Blockierungsmittel portionsweise so zugegeben, dass die Temperatur nicht über 140 °C steigt. Nach Beendigung der Zugabe des Blockierungsmittels wird die Reaktionsmischung zur Vervollständigung der Umsetzung nun etwa 1 bis 2 h bei 130 °C erhitzt. Das Blockierungsmittel wird in solchen Mengen zugegeben, dass auf 1 NCO-Äquivalent des urethanisierten Diisocyanats 0,7 bis 1,1 mol Blockierungsmittel, bevorzugt 1 mol, zur Reaktion kommen.

Geeignete Polyole für die Umsetzung mit dem Diisocyanat in der ersten Stufe des Herstellverfahrens sind alle in der PUR-Chemie bekannten Polyole wie z. B. Ethylenglykol, Propandiol-1,3, Butandiol-1,4, Pentandiol-1,5, 3-Methyl-pentandiol-1,5, Hexandiol-1,6, 2,2,4 (2,4,4)-Trimethylhexandiol-1,6, 1,4-Di(hydroxymethyl)-cyclohexan, Diethylenglykol, Triethylenglykol, Diethanolmethylamin, Neopentlylglykol, Triethanolamin, Trimethylolpropan, Trimethylolethan, Glycerin, Pentaerythrit.

Eine vorteilhafte Variante des Herstellverfahrens besteht darin, dass die blockierten Diisocyanat-Addukte in umgekehrter Reihenfolge hergestellt werden; d. h. in der ersten Stufe erfolgt partielle Umsetzung des Diisocyanats mit dem Blockierungsmittel und in der zweiten Stufe die Umsetzung mit dem Polyol.

Das besonders bevorzugte Diisocyanat zur Herstellung der Urethangruppen haltigen Isocyanatkomponente C) ist Isophorondiisocyanat.

Die o. g. Diisocyanate werden auch zur Herstellung der Trimerisate eingesetzt. Die Herstellung der Trimerisate erfolgte in bekannter Weise nach den Angaben der GB-PS 13 91 066, DE-PSS 23 25 826, 26 44 684 oder 29 16 201. Die Verfahrensprodukte bestehen aus Isocyanatoisocyanurat mit gegebenenfalls höheren Oligomeren. Sie weisen einen NCO-Gehalt von 10 bis 22 Gew.-% auf.

In der Urethan- und Isocyanuratgruppen enthaltenden Isocyanatkomponente C) ist das Verhältnis der Urethangruppen zu den Isocyanuratgruppen beliebig einstellbar.

Als Blockierungsmittel zur Blockierung der Isocyanatgruppen der Isocyanatkomponente C) können alle Blockierungsmittel eingesetzt werden. Beispielsweise können Phenole wie Phenol, und p-Chlorphenol, Alkohole wie Benzylalkohol, Oxime wie Acetonoxim, Methylethylketoxim, Cyclopentanonoxim, Cyclohexanonoxim, Methylisobutylketoxim, Methyl-tert.-butylketoxim, Diisopropylketoxim, Diisobutylketoxim oder Acetophenonoxim, N-Hydroxy-Verbindungen wie N-Hydroxysuccinimid oder Hydroxypyridine, Lactame wie ε-Caprolactam, CH-acide Verbindungen wie Acetessigsäureethylester oder Malonsäureester, Amine wie Diisopropylamin, heterocyclische Verbindungen mit mindestens einem Heteroatom wie Mercaptane, Piperidine, Piperazine, Pyrazole, Imidazole, Triazole und Tetrazole, α-Hydroxybenzoesäureester wie Glykolsäureester oder Hydroxamsäureester wie Benzylmethacrylohydroxamat verwendet werden.

Als Blockierungsmittel besonders geeignet sind ε-Caprolactam, Acetonoxim, Methylethylketoxim, Acetophenonoxim, Diisopropylamin, 3,5-Dimethylpyrazol, 1,2,4-Triazol, Glykolsäurebutylester, Benzylmethacylohydroxamat oder p-Hydroxybenzoesäuremethylester.

Selbstverständlich können auch Mischungen dieser Blockierungsmittel eingesetzt werden.

Zur Durchführung der Blockierungsreaktion wird im Allgemeinen die Isocyanatkomponente vorgelegt und das Blockierungsmittel portionsweise zugegeben. Die Reaktion kann in Substanz oder auch in Gegenwart geeigneter (inerter) Lösemittel durchgeführt werden. Bevorzugt wird jedoch in Substanz gearbeitet. Dabei wird die Isocyanatkomponente auf 90 - 130 °C erhitzt. Bei dieser Temperatur erfolgt in bekannter Weise die Zugabe des Blockierungsmittels. Nach Beendigung der Zugabe des Blockierungsmittels wird die Reaktionsmischung zur Vervollständigung der Umsetzung nun etwa 1 bis 2 h bei 120 □C erhitzt. Das Blockierungsmittel wird in solchen Mengen zugegeben, dass auf 1 NCO-Äquivalent der Isocyanatkomponente 0,5 bis 1,1 mol Blockierungsmittel, bevorzugt 0,8 bis 1 mol, besonders bevorzugt 1 mol, zur Reaktion kommen. Zur Beschleunigung der Isocyanat-Polyadditionsreaktion können die in der Polyurethan-Chemie üblichen Katalysatoren, wie z. B. organische Zinn-, Zink- oder Aminverbindungen in einer Menge von 0,01 bis 1 Gew.-%, bezogen auf das Gesamtgemisch, zugegeben werden.

Die Lösemittel freie Blockierungsreaktion kann auch kontinuierlich im statischen Mischer oder vorteilhaft im Mehrwellenkneter, insbesondere im Zweischneckenextruder, durchgeführt werden.

Der Gesamt-NCO-Gehalt der blockierten Isocyanatkomponente C) beträgt 8 bis 20 Gew.-%, vorzugsweise 9 bis 17 Gew.-%.

So können die erfindungsgemäßen Pulverlacke Härter C), basierend auf blockierten Polyisocyanaten, blockierten Isocyanuraten und Uretdionen allein oder in Mischungen, enthalten. Bevorzugt werden die Ausgangskomponenten ausgewählt aus IPDI, HDI und HMDI.

Die in den erfindungsgemäßen PUR-Pulverlacken enthaltenen Hilfs- und Zusatzstoffe D) sind z. B. Verlaufsmittel, Pigmente, Füllstoffe und Katalysatoren. Diese sind üblicherweise in Mengen von 1-50 Gew.-% enthalten.

### Allgemeine Herstellvorschrift der Pulverlacke:

Zur Herstellung der gebrauchsfertigen Pulverlacke werden der OH-funktionalisierte Polyester, der Isocyanat-basierende Härter, der Polyharnstoff-modifizierte Polyester, Verlaufsmittel, Pigmente , Füllstoffe und gegebenenfalls Katalysatoren miteinander bei Raumtemperatur gemischt und anschließend auf einem Extruder oder Kneter bei Temperaturen von 100 bis 140 °C homogenisiert. Das Verhältnis von Harz zu Härter wird so gewählt, dass pro OH-Gruppe des Harzes 0,6 bis 1,2, vorzugsweise 0,8 bis 1,0, NCO-Gruppen zur Verfügung stehen.

Nach dem Erkalten wird das Extrudat gebrochen, gemahlen und anschließend auf eine Korngröße < 100 um abgesiebt. Das so hergestellte Pulver wird mit einer elektrostatischen Pulverspritzanlage bei 60 KV auf entfettete Eisenbleche appliziert und in einem Umlufttrockenschrank zwischen 160 bis 210 °C eingebrannt.

Die Formulierungen enthalten 1 Gew.-% Resiflow PV 88 (Verlaufmittel der Worlée-Chemie) und 0,5 Gew.-% Benzoin (Entgasungsmittel der Fa. Merck-Schuchard). Das OH/NCO-Verhältnis beträgt 1 : 1. Als Härtungsbedingungen wurden 15 Min. bei 200 °C gewählt.

### Beispiele

### 1. Herstellung von Polyharnstoff in kristallinem Polyester durch Umsetzung einer Lösung von IPDI-Isocyanurat in Isophorondiisocyanat (IPDI) mit Isophorondiamin (IPD)

Der Polyharnstoff wird aus einer Mischung von 40 Gew.% IPDI-Isocyanurat und 60 Gew.% IPDI als Isocyanat-Komponente, sowie IPD als Amin, hergestellt.
Die Reaktion findet im kristallinen Polyester DYNACOLL 7390 statt. An der Gesamtrezeptur beträgt der DYNACOLL 7390-Anteil 79,8 Gew.%.
Das molare Verhältnis von NCO-Gruppen zu NH₂-Gruppen beträgt 1 : 1. Neben den NH₂-Gruppen liegen die OH-Gruppen aus dem Polyester (OH-Zahl 31,8 mg KOH/g) vor.
Der Polyester wird als grobes Pulver in das erste Gehäuse eines gleichläufigen Zweischneckenextruders in einer Menge von 15,99 kg/h eingespeist.
Der Extruder besitzt separat temperierbare Gehäuse (heizbar und kühlbar).
Gehäuse 1 wird auf 30°C, Gehäuse 2 auf 80°C und die folgenden Gehäuse auf 120 bis 190°C temperiert.
Die Isocyanat-Mischung wird bei einer Zulauftemperatur von 60 bis 80°C in Gehäuse 6 mit einer Durchsatzmenge von 2,66 kg/h dosiert.
Das Diamin wird in Gehäuse 3 bei einer Zulauftemperatur von 70 bis 95°C mit einer Durchsatzmenge von 1,38 kg/h dosiert.

Der Gesamtdurchsatz liegt damit bei 20,03 kg/h.
Die Austrittstemperatur liegt zwischen 100 und 115°C.
Die Extruderdrehzahl liegt bei 350 bis 450 UPM.
Das Produkt tritt als weiße Paste aus, die auf einem Kühlband abgekühlt und ausgehärtet wird.

### 2. Herstellung von Polyharnstoff in amorphem Polyester durch Umsetzung einer Lösung von IPDI-Isocyanurat in Isophorondiisocyanat (IPDI) mit Isophorondiamin (IPD)

Der Polyharnstoff wird aus einer Mischung von 40 Gew.% IPDI-Isocyanurat und 60 Gew.% IPDI als Isocyanat-Komponente, sowie IPD als Amin, hergestellt.
Die Reaktion findet im amorphem Polyester URALAC P1580 statt. An der Gesamtrezeptur beträgt der URALAC P1580-Anteil 79,9 Gew.%.
Das molare Verhältnis von NCO-Gruppen zu NH₂-Gruppen beträgt 1 : 1. Neben den NH₂-Gruppen liegen die OH-Gruppen aus dem Polyester (OH-Zahl 78,0 mg KOH/g) vor.
Der Polyester wird als grobes Pulver in das erste Gehäuse eines gleichläufigen Zweischneckenextruders in einer Menge von 15,99 kg/h eingespeist.
Der Extruder besitzt separat temperierbare Gehäuse (heizbar und kühlbar).
Gehäuse 1 wird auf 30°C, Gehäuse 2 auf 80°C und die folgenden Gehäuse auf 120 bis 190°C temperiert.
Die Isocyanat-Mischung wird bei einer Zulauftemperatur von 60 bis 80°C in Gehäuse 6 mit einer Durchsatzmenge von 2,66 kg/h dosiert.
Das Diamin wird in Gehäuse 3 bei einer Zulauftemperatur von 70 bis 95°C mit einer Durchsatzmenge von 1,37 kg/h dosiert.
Der Gesamtdurchsatz liegt damit bei 20,02 kg/h.
Die Austrittstemperatur liegt zwischen 170 und 260°C.
Die Extruderdrehzahl liegt bei 350 bis 450 UPM.
Das Produkt tritt als milchig weißer, viskoser Film aus, der auf einem Kühlband abgekühlt und ausgehärtet wird.

### 3. Pulverlacke

Die Herstellung der Pulverlacke erfolgt wie oben allgemein beschrieben.

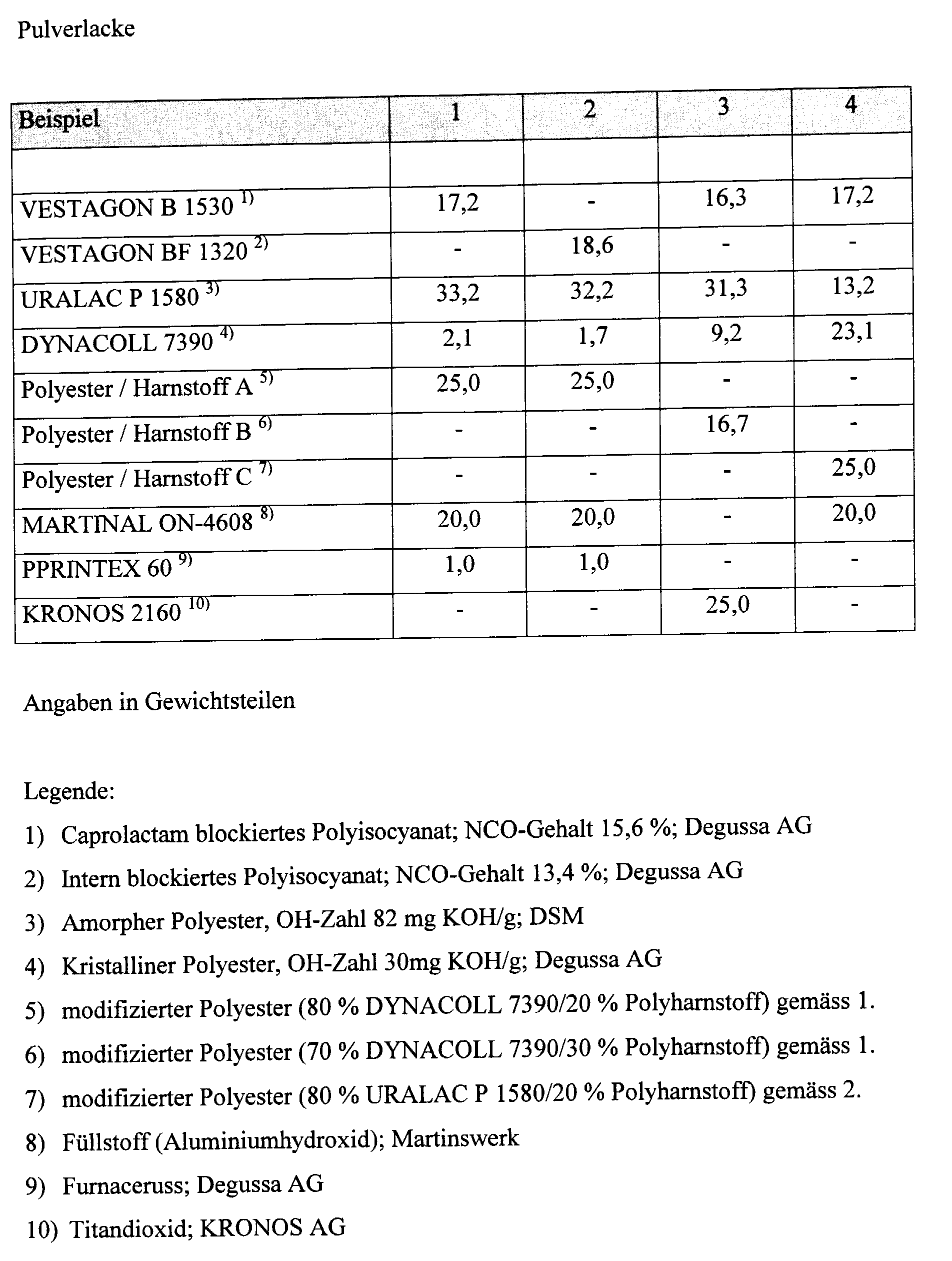

### 4. Lackdaten

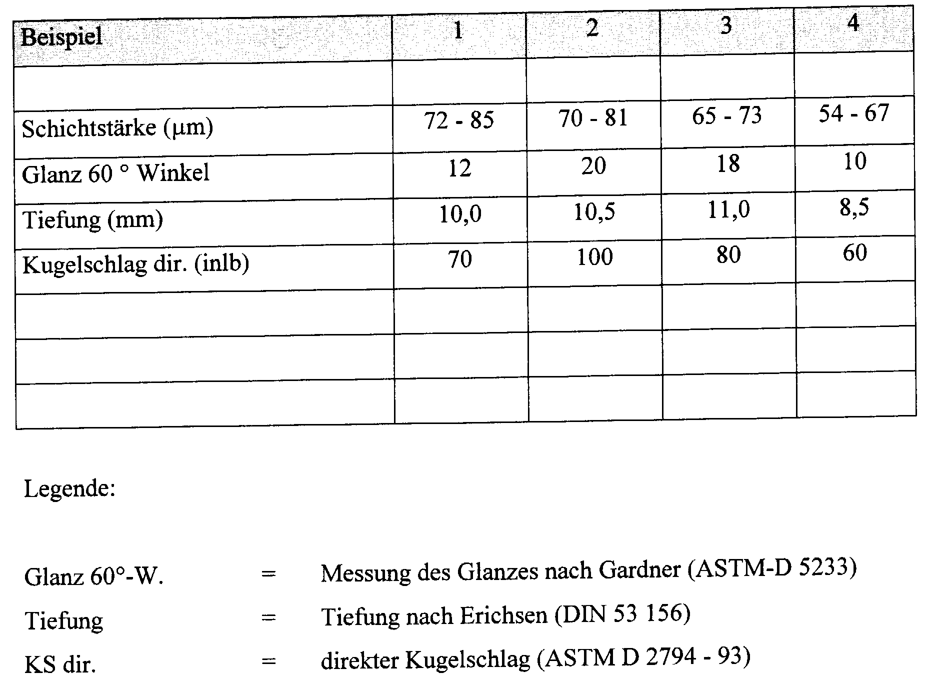

## Patentansprüche

1. Polyurethan-Pulverlacke enthaltend
A) 3 bis 35 Gew.-% einer polymeren Zusammensetzung aus
1. mindestens einem Polymer und
2. mindestens einem Duroplasten in Mengen von 0,5 bis 50 Gew.-%, bezogen auf die Summe von 1. und 2.,
hergestellt durch Reaktion in der Polymermatrix A1 aus
a) mindestens einer Ausgangskomponente mit NH₂-Gruppen
und
b) mindestens einer Ausgangskomponente mit NCO-Gruppen, wobei a) und b) gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens eines Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

2. Polyurethan-Pulverlacke nach Anspruch 1 enthaltend
A) 3 bis 35 Gew.-% einer polymeren Zusammensetzung aus
1. mindestens einem Polymer mit einer Funktionalität von ≥ 2,
und
2. mindestens einem Duroplasten in Mengen von 0,5 bis 50 Gew.-%, bezogen auf die Summe von 1. und 2.,
hergestellt durch Reaktion in der Polymermatrix A1) aus
a) mindestens einer Ausgangskomponente mit NH₂-Gruppen
und
b) mindestens einer Ausgangskomponente mit NCO-Gruppen, wobei a und b gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens eines Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

3. Polyurethan-Pulverlacke nach Anspruch 2,
enthaltend
A) 3 bis 35 Gew.-% einer polymeren Zusammensetzung aus
1. mindestens einem OH-Gruppen aufweisenden Polymer mit einer Funktionalität von ≥ 2, und
2. mindestens einem Duroplasten in Mengen von 0,5 bis 50 Gew.-%, bezogen auf die Summe von 1. und 2.,
hergestellt durch Reaktion in der Polymermatrix A1) aus
a) mindestens einer Ausgangskomponente mit NH₂-Gruppen
und
b) mindestens einer Ausgangskomponente mit NCO-Gruppen, wobei a) und b) gleichzeitig oder unabhängig eine Funktionalität von □ 2 aufweisen und mindestens eine Ausgangskomponente mit einer Funktionalität von > 2 in Mengen von 0,5 bis 100 Gew.-% vorhanden ist;
B) 15 bis 45 Gew.-% mindestens eines amorphen und/oder kristallinen Polyesters mit einer OH-Zahl von 10 bis 250 mg KOH/g;
C) 7 bis 25 Gew.-% mindestens eines Härters auf der Basis von blockierten Polyisocyanaten, Isocyanuraten und/oder Uretdionen mit einer Funktionalität von mindestens 1,7;
D) 1 bis 50 Gew.-% Hilfs- und Zusatzstoffe;
wobei pro OH-Gruppe von A) und B) 0,6 bis 1,2 NCO-Gruppen zur Verfügung stehen.

4. Polyurethan-Pulverlacke nach Anspruch 1,
**dadurch gekennzeichnet,**
**dass** als Polymere A1) Polyolefine, Polybutadiene, Polystyrole, Polysiloxane, Polyamide allein oder in Mischungen eingesetzt werden.

5. Polyurethan-Pulverlacke nach Anspruch 3,
**dadurch gekennzeichnet,**
**dass** als Polymer A1) OH-Gruppen aufweisende Polyester und/oder Polyacrylate eingesetzt werden.

6. Polyurethan-Pulverlacke nach Anspruch 5,
**dadurch gekennzeichnet,**
**dass** amorphe und/oder (semi)kristalline Polyester eingesetzt werden.

7. Polyurethan-Pulverlacke nach Anspruch 6,
**dadurch gekennzeichnet,**
**dass** amorphe Polyester mit einem Tg von 35 bis 85 °C, einem Schmelzbereich von 60 bis 110 °C, einer Molmasse von 2000 bis 7000 und einer OH-Zahl von 15 bis 200 mg KOH/g eingesetzt werden.

8. Polyurethan-Pulverlacke nach Anspruch 6,
**dadurch gekennzeichnet,**
**dass** kristalline Polyester mit einem Tg von -50 bis 40 °C, einem Schmelzbereich von 60 bis 130 °C, einer Molmasse von 1800 bis 6500 und einer OH-Zahl von 15 bis 130 mg KOH/g eingesetzt werden.

9. Polyurethan-Pulverlacke nach Anspruch 6 bis 8,
**dadurch gekennzeichnet,**
**dass** OH-gruppenhaltige Polyester, aufgebaut aus den Ausgangskomponenten Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, 1,4-Cyclohexandicarbonsäure und/oder - soweit zugänglich - deren Anhydride und/oder Ester eingesetzt werden.

10. Polyurethan-Pulverlacke nach Anspruch 6 bis 9,
**dadurch gekennzeichnet,**
**dass** OH-gruppenhaltige Polyester, aufgebaut aus den Diolen und/oder Polyolen Monoethylenglykol, 1,2- und 1,3-Propylenglykol, 1,4- und 2,3-Butylenglykol, Di-β-hydroxyethylbutandiol, 1,5-Pentandiol, 1,6-Hexandiol, 1,8-Octandiol, Decandiol, Dodecandiol, Neopentylglykol, Cyclohexandiol, 3(4),8(9)-Bis(hydroxymethyl)-tricyclo[5.2.1.0^{2,6}]decan (Dicidol), Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropan-diol-1,3, 2-Methyl-pentandiol-1,5, 2,2,4(2,4,4)-Trimethylhexandiol-1,6, Glycerin, Trimethyl-olpropan, Trimethylolethan, Hexantriol-1,2,6, Butantriol-1,2,4, Tris-(β-hydroxyethyl)-isocyanurat, Pentaerythrit, Mannit, Sorbit, Diethylenglykol, Triethylenglykol, Tetraethylenglykol, Dipropylenglykol, Polypropylenglykole, Polybutylenglykole, Xylylen-glykol und/oder Hydroxypivalinsäureneopentylglykolester eingesetzt werden.

11. Polyurethan-Pulverlacke nach Anspruch 5,
**dadurch gekennzeichnet,**
**dass** OH-gruppenhaltige Polyacrylate mit einer OH-Zahl von 20 bis 150 mg KOH/g, einer Molmasse von 1800 bis 6000 und einem Tg von 30 bis 90 °C eingesetzt werden.

12. Polyurethan-Pulverlacke nach mindestens einem der vorherigen Ansprüche,
**dadurch gekennzeichnet,**
**dass** als Komponente A2b) aliphatische, cycloaliphatische, araliphatische und/oder aromatische Isocyanate und/oder Isocyanurate eingesetzt werden.

13. Polyurethan-Pulverlacke nach Anspruch 12,
**dadurch gekennzeichnet,**
**dass** Cyclohexandiisocyanate, Methylcyclohexandiisocyanate, Ethylcyclohexandiisocyanate, Propylcyclohexandiisocyanate, Methyl-diethyl-cyclohexandiisocyanate, Phenylendiisocyanate, Toluylendiisocyanate, Bis(isocyanatophenyl)methan, Propandiisocyanate, Butandiidocyanate, Pentandiisocyanate, Hexandiisocyanate, wie Hexamethylendiisocyanat (HDI) oder 1,5-Diisocyanato-2-methylpentan (MPDI), Heptandiisocyanate, Octandiisocyanate, Nonandiisocyanate, wie 1,6-Diisocyanato-2-4-4-trimethylhexan oder 1,6-Diisocyanato-2,2,4-trimethylhexan (TMDI), Nonantriisocyanate, wie 4-Isocyanatomethy-1,8-octandiisocyanat (TIN), Dekandi- und triisocyanate, Undekandi- und -triisocyanate, Dodecandi- und -triisocyanate, Isophorondiisocyanat (IPDI), Bis(isocyanatomethylcyclohexyl)methan (H₁₂MDI), Isocyanatomethyl-methylcyclohexylisocyanate, 2,5(2,6)-Bis(isocyanatomethyl)bicyclo[2.2.1]heptan (NBDI), 1,3-Bis(isocyanatomethyl)cyclohexan (1,3-H₆-XDI) oder 1,4-Bis(isocyanatomethyl)cyclohexan (1,4-H₆-XDI), oder deren Isocyanurate soweit zugänglich, allein oder in Mischungen eingesetzt werden.

14. Polyurethan-Pulverlacke nach Anspruch 12,
**dadurch gekennzeichnet,**
**dass** Isophorondiisocyanat (IPDI) und/oder Hexamethylendiisocyanat (HDI) und/oder deren Isocyanurate eingesetzt werden.

15. Polyurethan-Pulverlacke nach mindestens einem der vorherigen Ansprüche,
**dadurch gekennzeichnet,**
**dass** als Komponente A2a) aliphatische, cycloaliphatische, araliphatische und/oder aromatische Diamine eingesetzt werden.

16. Polyurethan-Pulverlacke nach Anspruch 15,
**dadurch gekennzeichnet,**
**dass** als Diamine 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin (IPD), 4,7-Dioxadecan-1,10-diamin, N-(2-Aminoethyl)-1,2-ethyndiamin, N-(3-Aminopropyl)-1,3-propandiamin, N,N"-1,2-Ethandiylbis-(1,3-propandiamin) sowie Hexamethylendiamine, die auch einen oder mehrere C₁-C₄-Alkylreste tragen können, allein oder in Mischungen eingesetzt wird.

17. Polyurethan-Pulverlacke nach mindestens einem der Ansprüche 1 bis 16,
**dadurch gekennzeichnet,**
**dass** ein Duroplast aus IPDI, HDI-Isocyanurat und Isophorondiamin (IPD) enthalten ist.

18. Polyurethan-Pulverlacke nach mindestens einem der Ansprüche 1 bis 16,
**dadurch gekennzeichnet,**
**dass** ein Duroplast aus dem Isocyanurat des IPDI und IPD enthalten ist.

19. Polyurethan-Pulverlacke nach mindestens einem der Ansprüche 1 bis 16,
**dadurch gekennzeichnet,**
**dass** ein Duroplast aus einem Gemisch von IPDI und IPDI-Isocyanurat und IPD enthalten ist.

20. Polyurethan-Pulverlacke nach mindestens einem der Ansprüche 1 bis 16,
**dadurch gekennzeichnet,**
**dass** ein Duroplast aus IPDI-Isocyanurat, HDI und IPD enthalten ist.

21. Polyurethan-Pulverlacke nach mindestens einem der Ansprüche 1 bis 16,
**dadurch gekennzeichnet,**
**dass** ein Duroplast aus einem Gemisch von HDI und HDI-Isocyanurat und IPD enthalten ist.

22. Polyurethan-Pulverlacke nach mindestens einem der Ansprüche 1 bis 16,
**dadurch gekennzeichnet,**
**dass** ein Duroplast aus einem Gemisch von IPDI- und HDI-Isocyanurat und IPD enthalten ist.

23. Polyurethan-Pulverlacke nach mindestens einem der Ansprüche 1 bis 16,
**dadurch gekennzeichnet,**
**dass** ein Duroplast aus einem Gemisch von IPDI und IPDI-Isocyanurat und HDI und HDI-Isocyanurat enthalten ist.

24. Polyurethan-Pulverlacke nach mindestens einem der Ansprüche 1 bis 23,
**dadurch gekennzeichnet,**
**dass** die Umsetzung zum Duroplast in einem NCO/NH₂-Verhältnis von 0,8 bis 1,2 zu 1 erfolgt.

25. Polyurethan-Pulverlacke nach mindestens einem der Ansprüche 1 bis 24,
**dadurch gekennzeichnet,**
**dass** der Duroplast eine Molmasse von mindestens 4000 aufweist und mindestens 8 Gew.-%, bevorzugt 20 Gew.-%, besonders bevorzugt 40 bis 100 Gew.-% Isocyanurate und/oder Amine mit einer Funktionalität > 2, bevorzugt Isocyanurate, bevorzugt IPDI- und/oder HDI-Isocyanurat enthält.

26. Polyurethan-Pulverlacke nach mindestens einem der Ansprüche 1 bis 25,
**dadurch gekennzeichnet,**
**dass** 2 bis 30 Gew.-% Duroplast, insbesondere 3 bis 20 Gew.-%, in der polymeren Zusammensetzung, insbesondere im OH-haltigem Polyester und Polyacrylat, enthalten sind.

27. Polyurethan-Pulverlacke nach mindestens einem der vorherigen Ansprüche,
**dadurch gekennzeichnet,**
**dass** als Komponente B)
mindestens ein (semi)krisstalliner Polyester mit einer Hydroxylzahl von 5 bis 100 mg KOH/g, einem Schmelzpunkt von 50 bis 130 °C und einer Glasübergangstemperatur von < -10 °C enthalten ist.

28. Polyurethan-Pulverlacke nach mindestens einem der Ansprüche 1 bis 26,
**dadurch gekennzeichnet,**
**dass** als Komponente B)
mindestens ein amorpher Polyester mit einer Hydroxylzahl von 15 bis 200 mg KOH/g, einem Schmelzpunkt von □ 70 °C bis □120 °C und einer Glasübergangstemperatur von > 40 °C enthalten ist.

29. Polyurethan-Pulverlacke nach Anspruch 27 und 28,
**dadurch gekennzeichnet,**
**dass** Mischungen von (semi)kristallinen und amorphen Polyestern enthalten sind.

30. Polyurethan-Pulverlacke nach mindestens einem der vorherigen Ansprüche,
**dadurch gekennzeichnet,**
**dass** als Isocyanat in der Härterkomponente C) Diisocyanate aliphatischer und (cyclo)aliphatischer und/oder cycloaliphatischer Struktur eingesetzt werden.

31. Polyurethan-Pulverlacke nach mindestens einem der vorherigen Ansprüche,
**dadurch gekennzeichnet,**
**dass** als Isocyanat in der Komponente C) Hexamethylendiisocyanat, 2-Methylpentamethylen-1,5-diissocyanat, 2-Ethyltetramethylen-1,4-butandiisocyanat,2,2,4 (2,4,4)-Trimethylhexamethylen-1,6-diisocyanat, Isophorondiisocyanat, 4,4' Diisocanatodicyclohexylmethan oder Norbomandiisocyanat allein oder in Mischungen eingesetzt werden.

32. Polyurethan-Pulverlacke nach mindestens einem der vorherigen Ansprüche,
**dadurch gekennzeichnet,**
**dass** als Polyol in der Komponente C) Ethylenglykol, Propandiol-1,3, Butandiol-1,4, Pentandiol-1,5, 3-Methyyl-pentandiol-1,5, Hexandiol-1,6, 2,2,4 (2,4,4)-Trimethylenhexandiol-1,6, 1,4-Di(hyddroxymethyl)cyclohexan, Diethylenglykol, Trimethylenglykol, Diethanolmethylamin, Neopentlylglycol, Triethanolamin, Trimethyolpropan, Glycerin oder Pentaerythrit allein oder in Mischungen eingesetzt werden.

33. Polyurethan-Pulverlacke nach mindestens einem der vorherigen Ansprüche,
**dadurch gekennzeichnet,**
**dass** zur Herstellung der Komponente C) pro OH-Äquivalent des Polyols mindestens 2 und maximal 8 Äquivalente NCO des Diisocyanats zur Reaktion kommen.

34. Polyurethan-Pulverlacke nach mindestens einem der vorherigen Ansprüche,
**dadurch gekennzeichnet,**
**dass** als Isocyanat in der Komponente C) die Trimerisate von Hexamethylendiisocyanat, 2-Methylpentamethylen-1,5-diisocyanat, 2-Ethyltetramethylen-1,4-butan-diisocyanat, Trimethylhexamethylen-1,6-diisocyanat Isophorondiisocyanat, 4,4'-Diisocyanatodicyclohexylmethan oder Norbornandiisocyanat allein oder in Mischungen eingesetzt werden.

35. Polyurethan-Pulverlacke nach mindestens einem der vorherigen Ansprüche,
**dadurch gekennzeichnet,**
**dass** in der Urethan- und Isocyanuratgruppe enthaltenden Komponente C) das Verhältnis der Urethangruppen zu den Isocyanuratgruppen frei wählbar ist.

36. Polyurethan-Pulverlacke nach mindestens einem der vorherigen Ansprüche,
**dadurch gekennzeichnet,**
**dass** als Blockierungsmittel in der Komponente C) Phenol, p-Clorphenol, Benzylalkohol, Acetonoxim, Methylethylketoxim, Cyclopentanonoxim, Cyclohexanonoxim, Methylisobutylkentoxim, Methyl-tert.-butylketoxim, Diisopropylketoxim, Diisobutylketoxim, Acetophenonoxim, N-Hydroxysuccinimid, Hydroxypyridine, ε-Caprolactam, Acetessigsäureethylester, Malonsäureester, Diisopropylamin, 3,5-Dimethylpyrazol, 1,2,4-Triazol, Glykolsäureester, Benzylmethacrylohydroxamat oder p-Hydroxybenzoesäuremethylester allein oder in Mischungen eingesetzt werden.

37. Polyurethan-Pulverlacke nach mindestens einem der vorherigen Ansprüche,
**dadurch gekennzeichnet,**
**dass** die Komponente C) einen NCO-Gehalt von 8 bis 20 Gew.-% aufweist.

38. Polyurethan-Pulverlacke nach mindestens einem der vorherigen Ansprüche,
**dadurch gekennzeichnet,**
**dass** die Komponente C) so blockiert vorliegt, dass auf ein Äquivalent Isocyanat 0,5 bis 1,1 mol Blockierungsmittel kommen.

39. Polyurethan-Pulverlacke nach mindestens einem der vorherigen Ansprüche,
**dadurch gekennzeichnet,**
**dass** ein OH/NCO-Verhältnis von 1 : 0,8 bis 1,2 zugrunde liegt.

40. Polyurethan-Pulverlacke nach mindestens einem der vorherigen Ansprüche,
**dadurch gekennzeichnet,**
**dass** als Komponente D) Katalysatoren, Pigmente, Füllstoffe, Farbstoffe, Verlaufmittel, Licht- und Hitzestabilisatoren, Antioxidantien, Glanzverbesserer oder Effektadditive enthalten sind.

41. Polyurethan-Pulverlacke nach mindestens einem der vorherigen Ansprüche,
**dadurch gekennzeichnet,**
**dass** Katalysatoren in einer Konzentration von 0,01 bis 1,0 Gew.-% bezogen auf die gesamte Pulverlackzusammensetzung, enthalten sind.

42. Polyurethan-Pulverlacke nach Anspruch 41,
**dadurch gekennzeichnet,**
**dass** organische Zinnverbindungen und/oder Amine in einer Konzentration von 0,01 bis 1,0 Gew.-%, bezogen auf die gesamte Pulverlackzusammensetzung, enthalten sind.
